(19) Europäisches Patentamt / European Patent Office / Office européen des brevets

(11) **EP 3 929 800 A1**

(12) **EUROPEAN PATENT APPLICATION**

(43) Date of publication:
**29.12.2021 Bulletin 2021/52**

(51) Int Cl.:
**G06F 40/284** (2020.01)    **G06F 40/289** (2020.01)
**G06F 40/30** (2020.01)

(21) Application number: **21154941.5**

(22) Date of filing: **03.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.06.2020   CN 202010598970**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **ZHANG, Jingshuai**
  **Beijing, 100085 (CN)**
• **MA, Chao**
  **Beijing, 100085 (CN)**
• **ZHU, Hengshu**
  **Beijing, 100085 (CN)**
• **YAO, Kaichun**
  **Beijing, 100085 (CN)**

(74) Representative: **Canzler & Bergmeier**
**Patentanwälte**
**Partnerschaft mbB**
**Friedrich-Ebert-Straße 84**
**85055 Ingolstadt (DE)**

(54) **SKILL WORD EVALUATION METHOD AND DEVICE, ELECTRONIC DEVICE, AND COMPUTER READABLE MEDIUM**

(57)     The present disclosure provides a skill word evaluation method for a resume, and relates to the technical field of machine learning. The method includes determining (11) a to-be-evaluated first skill word list including a plurality of skill words, according to a resume document to be evaluated; and predicting (12), for each skill word in the first skill word list, a value of probability of presence of the skill word for representing importance of the skill word, by a pre-trained skill word evaluation model according to context information of the skill word in the first skill word list. The present disclosure further provides a skill word evaluation device, an electronic device and a computer readable medium.

11 — determining a to-be-evaluated first skill word list including a plurality of skill words, according to a resume document to be evaluated

12 — for each skill word in the first skill word list, predicting a value of probability of presence of the skill word for representing importance of the skill word, by a pre-trained skill word evaluation model according to context information of the skill word in the first skill word list

Fig. 1

**EP 3 929 800 A1**

**Description**

**TECHNICAL FIELD**

The embodiments of the present disclosure relate to the technical field of machine learning, in particular, to a skill word evaluation method for a resume, a skill word evaluation device for a resume, an electronic device and a computer readable medium.

**BACKGROUND**

At present, recruiters face hundreds of resumes in recruitments of enterprises. On one hand, in order to find out qualified talents for the enterprises, the recruiters generally adopt manual identification, evaluation and screening methods to deal with millions of resumes, which takes the recruiters a lot of time to identify effective information in the resumes. On the other hand, the enterprises often have different professional requirements for different positions, especially in terms of professional skills, but the recruiters cannot effectively identify all the professional skills in the resumes due to their limited knowledge, resulting in missing of the qualified talents.

Therefore, how to help the recruiters improve the efficiency and accuracy of screening of the resumes and the target talents has become an urgent technical problem.

**SUMMARY**

The embodiments of the present disclosure provide a skill word evaluation method for a resume, a skill word evaluation device for a resume, an electronic device and a computer readable medium.

In a first aspect, an embodiment of the present disclosure provides a skill word evaluation method for a resume, including: determining a to-be-evaluated first skill word list including a plurality of skill words, according to a resume document to be evaluated; and predicting, for each skill word in the first skill word list, a value of probability of presence of the skill word for representing importance of the skill word, by a pre-trained skill word evaluation model according to context information of the skill word in the first skill word list.

In a second aspect, an embodiment of the present disclosure provides a skill word evaluation device, including: a skill word acquisition module configured to determine a to-be-evaluated first skill word list including a plurality of skill words, according to a resume document to be evaluated; and a skill word evaluation module configured to predict, for each skill word in the first skill word list, a value of probability of presence of the skill word for representing importance of the skill word, by a pre-trained skill word evaluation model according to context information of the skill word in the first skill word list.

In a third aspect, an embodiment of the present disclosure provides an electronic device, including: one or more processors; and a memory having one or more programs stored thereon, in which when the one or more programs are executed by the one or more processors, the one or more processors perform the skill word evaluation method provided by any embodiment of the present disclosure.

In a fourth aspect, an embodiment of the present disclosure provides a computer readable medium having a computer program stored thereon, in which when the computer program is executed, the skill word evaluation method provided by any embodiment of the present disclosure is implemented.

According to the skill word evaluation method for a resume, the skill word evaluation device for a resume, the electronic device and the computer readable medium provided by the embodiments of the present disclosure, accuracy of skill word evaluation is improved, efficiency of resume screening is increased, and time cost of manual screening and evaluation is greatly saved.

**BRIEF DESCRIPTION OF THE DRAWINGS**

The accompanying drawings are intended to provide further understanding of the embodiments of the present disclosure, and are incorporated in and constitute a part of the Specification. The drawings, together with the embodiments of the present disclosure, are intended to explain the present disclosure, rather than limiting the present disclosure. With the detailed description of exemplary embodiments with reference to the drawings, the above and other features and advantages will become more apparent to those skilled in the art. In the drawings:

Fig. 1 is a flowchart illustrating a skill word evaluation method for a resume according to an embodiment of the present disclosure;
Fig. 2 is a flowchart illustrating a specific implementation of the step 11 shown in Fig. 1;
Fig. 3 is a flowchart illustrating a specific implementation of the step 111 shown in Fig. 2;

Fig. 4 is a flowchart illustrating a method of training a skill word evaluation model according to an embodiment of the present disclosure;

Fig. 5 is a schematic diagram of a neural network structure of a word embedding model according to an embodiment of the present disclosure;

Fig. 6 is a block diagram of a skill word evaluation device according to an embodiment of the present disclosure;

Fig. 7 is a block diagram of a skill word acquisition module shown in Fig. 6;

Fig. 8 is another block diagram of a skill word evaluation device according to an embodiment of the present disclosure; and

Fig. 9 is a block diagram of an electronic device according to an embodiment of the present disclosure.

## DETAILED DESCRIPTION

In order to enable those skilled in the art to better understand the technical solutions of the present disclosure, a skill word evaluation method for a resume, a skill word evaluation device for a resume, an electronic device and a computer readable medium provided by the present disclosure are described in detail below with reference to the accompanying drawings.

Although exemplary embodiments will be described in more detail below with reference to the drawings, the exemplary embodiments can be embodied in various forms and should not be interpreted as limitation to the present disclosure. Rather, these embodiments are provided for facilitating thorough and complete understanding of the present disclosure, and enabling those skilled in the art to fully understand the scope of the present disclosure.

The embodiments and the features thereof in the present disclosure may be combined with one another if no conflict is incurred.

As used herein, the term "and/or" includes any and all combinations of one or more of the associated listed items.

The terms used herein are intended to describe specific embodiments, rather than limiting the present disclosure. Unless expressly indicated otherwise, the singular terms "a", "an" and "the" used herein are intended to include plural forms as well. It should also be understood that the terms "include" and/or "comprise", when used herein, specify the presence of the stated features, integers, steps, operations, elements, and/or components, but do not preclude the presence or addition of one or more other features, integers, steps, operations, elements, components, and/or the groups thereof.

Unless defined otherwise, all the terms (including technical and scientific terms) used herein have the same meaning as commonly understood by those skilled in the art. Unless expressly defined herein, the terms defined in generally used dictionaries should be interpreted as having the meanings given in the context of the related art and the present disclosure, and should not be interpreted as having idealized or overly formal meanings.

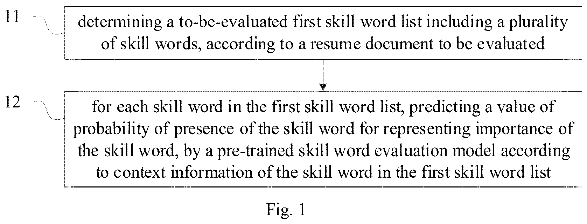

Fig. 1 is a flowchart illustrating a skill word evaluation method for a resume according to an embodiment of the present disclosure. The method can be performed by a skill word evaluation device, which may be implemented as software and/or hardware, and integrated in an electronic device, such as a server. As shown in Fig. 1, the skill word evaluation method includes step 11 and step 12.

At step 11, determining a to-be-evaluated first skill word list including a plurality of skill words, according to a resume document to be evaluated.

In some application scenarios, after receiving one or more resume documents from candidates through, for example, recruiting email systems, job search websites and recruiting Apps, the recruiters may send the resume documents to the skill word evaluation device for evaluation. In some application scenarios, after receiving the resume documents of the candidates, the recruiting email systems, the job search websites and the recruiting Apps may automatically forward the resume documents to the skill word evaluation device. In some application scenarios, the skill word evaluation device may acquire the resume documents of the candidates from the recruiting email systems, the job search websites and the recruiting Apps by making an active query at a preset interval (for example, an interval of 10 minutes or 20 minutes). In some application scenarios, the resume documents may be paper resume documents; and after obtaining the paper resume documents, the recruiters may convert the paper resume documents into electronic-version resume documents by scanning and then send the electronic-version resume documents to the skill word evaluation device.

In one embodiment of the present disclosure, the skill word evaluation device performs the step 11 and the step 12 on each resume document after receiving the resume documents, so as to complete automatic evaluation of the skill words in each resume document. In some embodiments, after the skill word evaluation device completes the evaluation of the skill words in each resume document, the skill word evaluation device may display a skill word evaluation result of each resume document to the recruiters in a proper way, such as through a human-computer interaction interface, so as to allow the recruiters to quickly and accurately obtain a profile of skills of the candidate from the resume thereof and complete resume screening.

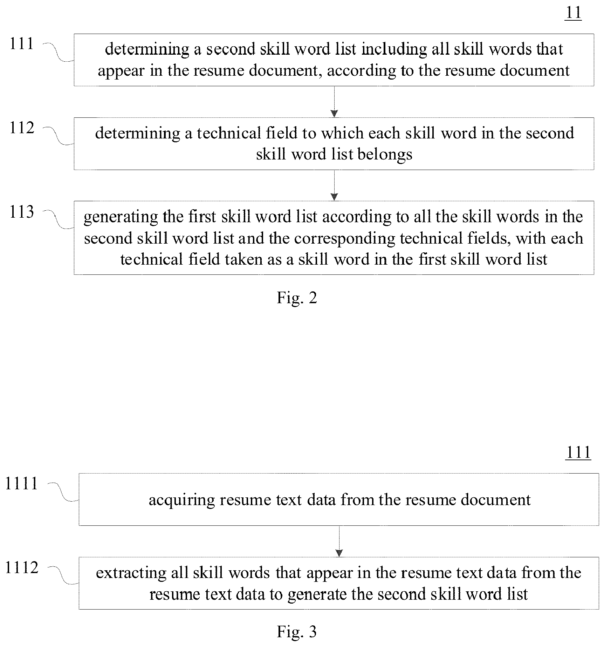

Fig. 2 is a flowchart illustrating a specific implementation of the step 11 shown in Fig. 1. According to some embodiments, as shown in Fig. 2, the step 11 includes steps 111 to 113.

At step 111, determining a second skill word list including all skill words that appear in the resume document, according to the resume document.

Fig. 3 is a flowchart illustrating a specific implementation of the step 111 shown in Fig. 2. According to some embodiments, as shown in Fig. 3, the step 111 includes step 1111 and step 1112.

At step 1111, acquiring resume text data from the resume document.

Specifically, in the step 1111, after the resume document is obtained, the resume document is standardized and formatted to acquire the resume text data of the resume document, and the resume text data includes a description of work experiences, a description of project experiences, a description of personal professional skills, and other text data.

At step 1112, extracting all skill words that appear in the resume text data from the resume text data to generate the second skill word list.

Specifically, in the step 1112, the resume text data is first subjected to word segmentation with a preset word segmentation tool to produce a word segmentation result, which includes respective words that appear in the resume text data.

Then, the word segmentation result is filtered to find out all the skill words that appear in the resume text data by using a preset field skill thesaurus. Specifically, the word found through the word segmentation is matched with the skill words in the field skill thesaurus, and if the found word matches a skill word in the field skill thesaurus, the found word is taken as a skill word. The skill words may be in Chinese or in English, or in the form of Chinese/English abbreviations.

At step 1112, all the skill words that appear in the resume text data are obtained after filtering out non-skill words from the resume text data, and generating the second skill word list is generated according to all the skill words.

At step 112, determining a technical field to which each skill word in the second skill word list belongs.

According to some embodiments, to help the recruiters better understand the skill words, the technical fields to which the skill words belong need to be identified. Specifically, in the step 112, the technical field to which each skill word in the second skill word list belongs is determined by using a preset knowledge map including a correspondence between a skill word and the technical field to which the skill word belongs, and each technical field may include a plurality of skill words. For example, the skill word "TensorFlow" belongs to the field of "deep learning". The recruiters may seriously misinterpret the resumes of the candidates when they do not understand some skill words (e.g. "Tensor-Flow"). Therefore, in some embodiments, the preset knowledge map including the correspondences between the technical fields and the skill words is introduced to expand hyponymy, synonymy, and the like between the skill words and reasonably standardize the description of the skill words, so that an input into a model in subsequent steps can be standardized, and the readability of a result output by the model can also be improved, thereby strengthening recruiters' understanding of skill words in resumes.

At step 113, generating the first skill word list according to all the skill words in the second skill word list and the corresponding technical fields, with each technical field taken as a skill word in the first skill word list.

In some embodiments, in the step 113, after all the skill words that appear in the resume document are acquired and the technical field to which each skill word belongs is identified, each technical field is taken as a skill word, and the first skill word list is generated according to all the skill words that appear in the resume document and the corresponding technical fields. In the first skill word list, each technical field is taken as a skill word.

At step 12, for each skill word in the first skill word list, predicting a value of probability of presence of the skill word for representing importance of the skill word, by a pre-trained skill word evaluation model according to context information of the skill word in the first skill word list.

It should be understood that the context information of the skill word in the first skill word list includes other skill words in the first skill word list except the skill word. In the step 12, an input into the pre-trained skill word evaluation model is word vectors corresponding to the other skill words in the first skill word list except the skill word, and an output of the model is the value of probability of presence of the skill word, that is, the probability of presence of the skill word under a condition that the other skill words in the resume document are known. The value of probability may represent the importance of the corresponding skill word, and the larger the value of probability is, the greater the importance of the skill word is.

Specifically, in the step 12, a corresponding word vector is first generated for each of the other skill words in the first skill word list except the skill word. The word vectors corresponding to the skill words may be generated by means of one-hot (Onehot) encoding.

Then, the word vector corresponding to each of the other skill words in the first skill word list except the skill word is input into the pre-trained skill word evaluation model, and the value of probability of presence of the skill word is predicted by the skill word evaluation model.

Each skill word in the first skill word list is subjected to prediction by the pre-trained skill word evaluation model, so as to obtain values of probability of presence of all the skill words in the first skill word list.

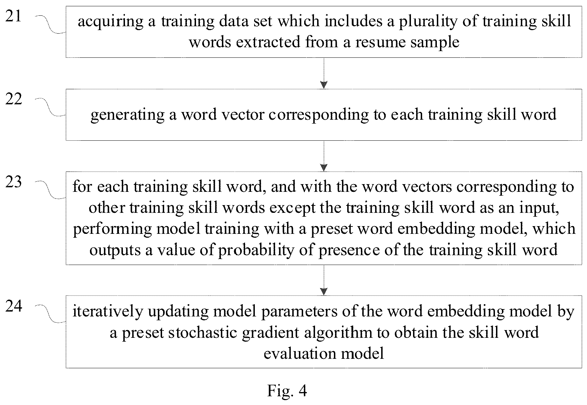

Fig. 4 is a flowchart illustrating a method of training a skill word evaluation model according to an embodiment of the present disclosure. As shown in Fig. 4, in some embodiments, the skill word evaluation model is trained by the following steps 21 to 24.

At step 21, acquiring a training data set which includes a plurality of training skill words extracted from a resume sample.

The plurality of training skill words include the skill words extracted from the resume sample and the corresponding technical fields.

At step 22, generating a word vector corresponding to each training skill word.

In some embodiments, the word vector corresponding to each training skill word may be obtained by one-hot (Onehot) encoding each training skill word.

At step 23, performing, for each training skill word, and with the word vectors corresponding to other training skill words except the training skill word as an input, model training with a preset word embedding model, which outputs a value of probability of presence of the training skill word.

The word vectors corresponding to the other training skill words except the training skill word are denoted by $x_1, x_2, ... , x_C$, respectively, and C is the total number of the other training skill words except the training skill word.

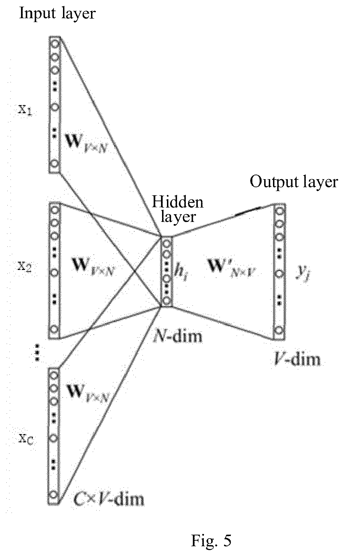

In some embodiments, the word embedding model includes a continuous bag of words (CBOW) neural network model. Fig. 5 is a schematic diagram of a neural network structure of a word embedding model according to an embodiment of the present disclosure. As shown in Fig. 5, the word embedding model includes an input layer, a hidden layer, and an output layer.

The input layer receives an input of C training skill words: $\{x_1, x_2, ..., x_C\}$, C is a window size, V is a vocabulary length, and indicates the total number of the skill words in the field skill thesaurus.

The hidden layer is an N-dimensional vector, N is the number of neurons in the hidden layer, and an output h of the hidden layer is expressed as follows:

$$ \mathrm{h} = \frac{1}{C} W^T (x_1 + x_2 + \cdots + x_C) $$

where $W^T$ is an N*V-dimensional weight matrix from the input layer to the hidden layer, h is the output of the hidden layer, and indicates a weighted average of the word vectors corresponding to the C training skill words, and $x_1, x_2, ..., x_C$ are the word vectors corresponding to the other training skill words except the training skill word respectively.

An input into the output layer is a $V \times 1$-dimensional vector u, which satisfies that u = $W'^T \cdot$ h, where $W'^T$ is an N*V-dimensional weight matrix from the hidden layer to the output layer to, the $j^{th}$ element of the vector u is an inner product of the $j^{th}$ column of $W'^T$ and the output h of the hidden layer, that is, $u_j = v'^T_{w_j} \cdot \mathrm{h},$ where $v'^T_{w_j}$ represents the $j^{th}$ column of $W'^T,$ and $u_j$ represents a score of the $j^{th}$ skill word in the field skill thesaurus. The skill word having the highest score is selected as a to-be-output skill word, and the vector u is normalized by the Softmax (logistic regression) function to a range of [0, 1], so as to predict the probability of the to-be-output skill word, and finally obtain an output vector $y_j$ from the output layer. yj is expressed as follows:

$$ y_j = \mathrm{P}(x_i|\mathrm{contex}(x_i)) = softmax(u) = \frac{\exp(u_j)}{\sum_{k \in V} \exp(u_k)} $$

where $x_i$ represents the $i^{th}$ skill word in the training skill word list, contex($x_i$) represents other skill words in the training skill word list except $x_i$, and P($x_i$|contex($x_i$)) represents a value of probability of presence of the output $i^{th}$ skill word.

At step 24, iteratively updating model parameters of the word embedding model by a preset stochastic gradient algorithm to obtain the skill word evaluation model.

In the step 24, the model parameters $W^T$ and $W'^T$ are continuously updated by a stochastic gradient descent algorithm during the model training process until the model converges, so as to finally obtain the required skill word evaluation model.

According to the skill word evaluation method provided by the embodiments of the present disclosure, skill information in a resume is automatically extracted, and a value of probability of presence of a skill word is predicted by the pre-trained skill word evaluation model according to the context information of the skill word; and the larger the value of probability is, the greater the importance of the skill word is. Thus, automatic evaluation of each skill word in the resume can be achieved, and accuracy of skill word evaluation can be improved. Meanwhile, a profile of skills can be quickly created from the resume. Therefore, the skill word evaluation method provided can effectively help recruiters quickly extract the skill information from a resume, understand the resume and complete resume screening, efficiency of resume screening is increased, and time cost of manual screening and evaluation is greatly saved.

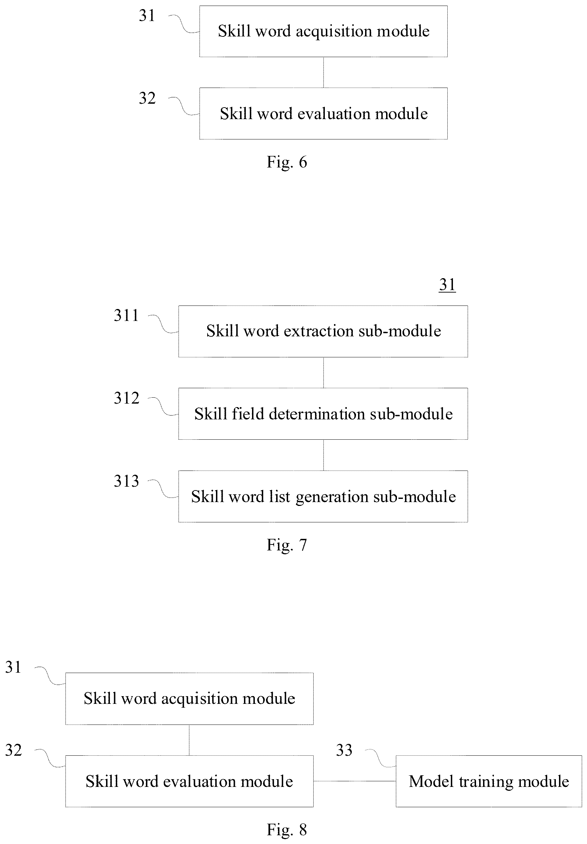

Fig. 6 is a block diagram of a skill word evaluation device according to an embodiment of the present disclosure. As shown in Fig. 6, the skill word evaluation device is configured to implement the above skill word evaluation method, and includes a skill word acquisition module 31 and a skill word evaluation module 32.

The skill word acquisition module 31 is configured to determine a to-be-evaluated first skill word list including a plurality of skill words, according to a resume document to be evaluated.

The skill word evaluation module 32 is configured to predict, for each skill word in the first skill word list, a value of probability of presence of the skill word for representing importance of the skill word, by a pre-trained skill word evaluation model according to context information of the skill word in the first skill word list.

Fig. 7 is a block diagram of a skill word acquisition module shown in Fig. 6. As shown in Fig. 7, in some embodiments, the skill word acquisition module 31 includes a skill word extraction sub-module 311, a skill field determination sub-module 312, and a skill word list generation sub-module 313.

The skill word extraction sub-module 311 is configured to determine a second skill word list including all skill words that appear in the resume document, according to the resume document; the skill field determination sub-module 312 is configured to determine a technical field to which each skill word in the second skill word list belongs; and the skill word list generation sub-module 313 is configured to generate the first skill word list according to all the skill words in the second skill word list and the corresponding technical fields, with each technical field taken as a skill word in the first skill word list.

In some embodiments, the skill word extraction sub-module 311 is specifically configured to acquire resume text data from the resume document, and extract all skill words that appear in the resume text data from the resume text data to generate the second skill word list.

In some embodiments, the skill word extraction sub-module 311 is specifically configured to perform word segmentation on the resume text data with a preset word segmentation tool, and filter a word segmentation result to find out all the skill words that appear in the resume text data by using a preset field skill thesaurus.

In some embodiments, the skill field determination sub-module 312 is specifically configured to determine the technical field to which each skill word in the second skill word list belongs by using a preset knowledge map.

Fig. 8 is another block diagram of a skill word evaluation device according to an embodiment of the present disclosure. As shown in Fig. 8, the skill word evaluation device further includes a model training module 33.

The model training module 33 is configured to acquire a training data set including a plurality of training skill words extracted from a resume sample, generate a word vector corresponding to each training skill word, and, for each training skill word, and with the word vectors corresponding to other training skill words except the training skill word as an input, perform model training with a preset word embedding model, which outputs a value of probability of presence of the training skill word, and iteratively update model parameters of the word embedding model by a preset stochastic gradient algorithm to obtain the skill word evaluation model.

In some embodiments, the word embedding model includes a CBOW neural network model.

In addition, the skill word evaluation device provided by the embodiments of the present disclosure is specifically configured to implement the above skill word evaluation method. Reference may be made to the above description of the skill word evaluation method for the specific implementations, which are not repeated here.

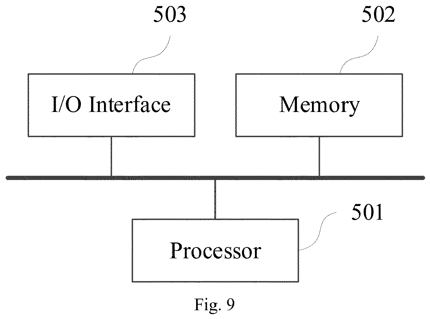

Fig. 9 is a block diagram of an electronic device according to an embodiment of the present disclosure. As shown in Fig. 9, the electronic device includes one or more processors 501; a memory 502 having one or more programs stored thereon; and one or more I/O interfaces 503 connected between the processor 501 and the memory 502 and configured to enable information interaction between the processor 501 and the memory 502. When the one or more programs are executed by the one or more processors 501, the one or more processors 501 are capable of performing the above skill word evaluation method.

The embodiments of the present disclosure further provide a computer readable storage medium having a computer program stored thereon. The above skill word evaluation method is implemented when the computer program is executed.

It should be understood by those skilled in the art that the functional modules/units in all or some of the steps, systems, and devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or step may be performed through cooperation of several physical components. Some or all of the physical components may be implemented as software executed by a processor, such as a central processing unit, a digital signal processor, or a microprocessor, or may be implemented as hardware, or may be implemented as an integrated circuit, such as an application specific integrated circuit. Such software may be distributed on computer-readable media, which may include computer storage media (or non-transitory media) and communication media (or transitory media). As well known by those skilled in the art, the term "computer storage media" includes volatile/nonvolatile and removable/non-removable media used in any method or technology for storing information (such as computer-readable instructions, data structures, program modules and other data). The computer storage media include, but are not limited to, RAM, ROM, EEPROM, flash memory or other memory techniques, CD-ROM, digital versatile disk (DVD) or other optical discs, magnetic cassette, magnetic tape, magnetic disk or other magnetic storage devices, or any other media which can be used to store the desired information and can be accessed by a computer. In addition, it is well known by those skilled in the art that the communication media generally include computer-readable instructions, data structures, program modules or other data in a modulated data signal, such as a carrier wave or other transmission mechanism, and may include any information delivery media.

It should be understood that both the exemplary embodiments and the specific terms disclosed in the present disclosure are for the purpose of illustration, rather than for limiting the present disclosure. It is obvious to those skilled in the art that the features, characteristics and/or elements described in connection with a particular embodiment may be used alone or in combination with the features, characteristics and/or elements described in connection with other embodiments in some examples, unless expressly indicated otherwise. Therefore, it should be understood by those skilled in the art that various changes in form and detail may be made without departing from the scope of the present disclosure as set forth in the appended claims.

**Claims**

1.  A skill word evaluation method for a resume, comprising:

    determining (11) a to-be-evaluated first skill word list, which comprises a plurality of skill words, according to a resume document to be evaluated; and
    predicting (12), for each skill word in the first skill word list, a value of probability of presence of the skill word for representing importance of the skill word, by a pre-trained skill word evaluation model according to context information of the skill word in the first skill word list.

2.  The skill word evaluation method of claim 1, wherein the step of determining (11) the to-be-evaluated first skill word list according to the resume document to be evaluated comprises:

    determining (111) a second skill word list, which comprises all skill words that appear in the resume document, according to the resume document;
    determining (112) a technical field to which each skill word in the second skill word list belongs; and
    generating (113) the first skill word list according to all the skill words in the second skill word list and the corresponding technical fields, with each technical field taken as a skill word in the first skill word list.

3.  The skill word evaluation method of claim 2, wherein the step of determining (111) the second skill word list according to the resume document comprises:

    acquiring (1111) resume text data from the resume document; and
    extracting (1112) all skill words that appear in the resume text data from the resume text data to generate the second skill word list.

4.  The skill word evaluation method of claim 3, wherein the step of extracting (1112) all the skill words that appear in the resume text data from the resume text data comprises:

    performing word segmentation on the resume text data with a preset word segmentation tool; and
    filtering a word segmentation result to find out all the skill words that appear in the resume text data by using a preset field skill thesaurus.

5.  The skill word evaluation method of claim 2, wherein the step of determining (112) the technical field to which each skill word in the second skill word list belongs comprises:
    determining the technical field to which each skill word in the second skill word list belongs by using a preset knowledge map.

6.  The skill word evaluation method of claim 1, wherein the skill word evaluation model is trained by the following steps:

    acquiring (21) a training data set which comprises a plurality of training skill words extracted from a resume sample;

generating (22) a word vector corresponding to each training skill word;

performing (23), for each training skill word, and with the word vectors corresponding to other training skill words except the training skill word as an input, model training with a preset word embedding model, which outputs a value of probability of presence of the training skill word; and

iteratively updating (24) model parameters of the word embedding model by a preset stochastic gradient algorithm to obtain the skill word evaluation model,

preferably the step of generating (22) the word vector corresponding to each training skill word comprises:

one-hot encoding each training skill word to obtain the corresponding word vector,

preferably the word embedding model comprises a continuous bag of words neural network model.

7. The skill word evaluation method of claim 1, wherein the context information of the skill word in the first skill word list comprises other skill words in the first skill word list except the skill word; and

the step of predicting (12) the value of probability of presence of the skill word by the pre-trained skill word evaluation model according to the context information of the skill word in the first skill word list comprises:

generating a corresponding word vector for each of the other skill words in the first skill word list except the skill word; and

inputting the word vector corresponding to each of the other skill words in the first skill word list except the skill word into the skill word evaluation model, and predicting the value of probability of presence of the skill word by the skill word evaluation model.

8. A skill word evaluation device, comprising:

a skill word acquisition module (31) configured to determine a to-be-evaluated first skill word list, which comprises a plurality of skill words, according to a resume document to be evaluated; and

a skill word evaluation module (32) configured to predict, for each skill word in the first skill word list, a value of probability of presence of the skill word for representing importance of the skill word, by a pre-trained skill word evaluation model according to context information of the skill word in the first skill word list.

9. The skill word evaluation device of claim 8, wherein the skill word acquisition module (31) comprises a skill word extraction sub-module (311), a skill field determination sub-module (312) and a skill word list generation sub-module (313);

the skill word extraction sub-module (311) is configured to determine a second skill word list, which comprises all skill words that appear in the resume document, according to the resume document;

the skill field determination sub-module (312) is configured to determine a technical field to which each skill word in the second skill word list belongs; and

the skill word list generation sub-module (313) is configured to generate the first skill word list according to all the skill words in the second skill word list and the corresponding technical fields, with each technical field taken as a skill word in the first skill word list.

10. The skill word evaluation device of claim 9, wherein the skill word extraction sub-module (311) is configured to acquire resume text data from the resume document, and extract all skill words that appear in the resume text data from the resume text data to generate the second skill word list.

11. The skill word evaluation device of claim 10, wherein the skill word extraction sub-module (311) is configured to perform word segmentation on the resume text data with a preset word segmentation tool, and filter a word segmentation result to find out all the skill words that appear in the resume text data by using a preset field skill thesaurus.

12. The skill word evaluation device of claim 9, wherein the skill field determination sub-module (312) is configured to determine the technical field to which each skill word in the second skill word list belongs by using a preset knowledge map.

13. The skill word evaluation device of claim 8, further comprising a model training module (33); and

the model training module (33) is configured to acquire a training data set which comprises a plurality of training skill words extracted from a resume sample, generate a word vector corresponding to each training skill word, and, for each training skill word, and with the word vectors corresponding to other training skill words except the training skill word as an input, perform model training with a preset word embedding model, which outputs a value of probability of presence of the training skill word, and iteratively update model parameters of the word embedding model by a preset stochastic gradient algorithm to obtain the skill word evaluation model, preferably the word embedding model comprises a continuous bag of words neural network model.

14. An electronic device, comprising:

one or more processors; and
a memory having one or more programs stored thereon,
wherein when the one or more programs are executed by the one or more processors, the one or more processors perform the skill word evaluation method of any one of claims 1 to 7.

15. A computer readable medium having a computer program stored thereon, wherein when the computer program is executed, the skill word evaluation method of any one of claims 1 to 7 is implemented.

11 — determining a to-be-evaluated first skill word list including a plurality of skill words, according to a resume document to be evaluated

12 — for each skill word in the first skill word list, predicting a value of probability of presence of the skill word for representing importance of the skill word, by a pre-trained skill word evaluation model according to context information of the skill word in the first skill word list

Fig. 1

<u>11</u>

111 — determining a second skill word list including all skill words that appear in the resume document, according to the resume document

112 — determining a technical field to which each skill word in the second skill word list belongs

113 — generating the first skill word list according to all the skill words in the second skill word list and the corresponding technical fields, with each technical field taken as a skill word in the first skill word list

Fig. 2

<u>111</u>

1111 — acquiring resume text data from the resume document

1112 — extracting all skill words that appear in the resume text data from the resume text data to generate the second skill word list

Fig. 3

21 — acquiring a training data set which includes a plurality of training skill words extracted from a resume sample

22 — generating a word vector corresponding to each training skill word

23 — for each training skill word, and with the word vectors corresponding to other training skill words except the training skill word as an input, performing model training with a preset word embedding model, which outputs a value of probability of presence of the training skill word

24 — iteratively updating model parameters of the word embedding model by a preset stochastic gradient algorithm to obtain the skill word evaluation model

Fig. 4

Fig. 5

31    Skill word acquisition module

32    Skill word evaluation module

Fig. 6

<u>31</u>

311    Skill word extraction sub-module

312    Skill field determination sub-module

313    Skill word list generation sub-module

Fig. 7

31    Skill word acquisition module

32    Skill word evaluation module

33    Model training module

Fig. 8

503    502

| I/O Interface | Memory |
|---|---|

Processor    501

Fig. 9

Europäisches
Patentamt

European
Patent Office

Office européen
des brevets

# EUROPEAN SEARCH REPORT

Application Number

EP 21 15 4941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Zhao Meng ET AL: "SKILL: A System for Skill Identification and Normalization", , 2015, XP055818870, Retrieved from the Internet: URL:https://www.aaai.org/ocs/index.php/IAA I/IAAI15/paper/viewFile/9363/9907 [retrieved on 2021-06-28] * the whole document * | 1-15 | INV. G06F40/284 G06F40/289 G06F40/30 |
| X | Hoang Phuong ET AL: "Large-Scale Occupational Skills Normalization for Online Recruitment", The AI magazine, 1 February 2017 (2017-02-01), pages 5-14, XP055818877, DOI: 10.1609/aimag.v39i1.2775 Retrieved from the Internet: URL:https://www.aaai.org [retrieved on 2021-06-28] * secions 1 to 5 * | 1-15 | |
| X | ZU SHICHENG ET AL: "Resume Information Extraction with A Novel Text Block Segmentation Algorithm", INTERNATIONAL JOURNAL ON NATURAL LANGUAGE COMPUTING, vol. 8, no. 5, 31 October 2019 (2019-10-31), pages 29-48, XP055818879, ISSN: 2319-4111, DOI: 10.5121/ijnlc.2019.8503 Retrieved from the Internet: URL:https://aircconline.com/ijnlc/V8N5/851 9ijnlc03.pdf> * sections 1-4 * | 1-15 | TECHNICAL FIELDS SEARCHED (IPC) G06F |

-/--

The present search report has been drawn up for all claims

| Place of search | Date of completion of the search | Examiner |
|---|---|---|
| Berlin | 29 June 2021 | Alt, Susanne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 15 4941

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/193382 A1 (MICHAELS ROBERT P [US]) 18 June 2020 (2020-06-18) * paragraphs [0032] - [0061], [0157] - [0167]; claims 1-11; figure 1 * ----- | 1-15 | |
| X | CN 111 198 943 A (TCL CORP) 26 May 2020 (2020-05-26) * and corresponding passages; figures 1,2 * ----- | 1-15 | |

TECHNICAL FIELDS
SEARCHED      (IPC)

The present search report has been drawn up for all claims

| Place of search | Date of completion of the search | Examiner |
|---|---|---|
| Berlin | 29 June 2021 | Alt, Susanne |

EPO FORM 1503 03.82 (P04C01)

## ANNEX TO THE EUROPEAN SEARCH REPORT
## ON EUROPEAN PATENT APPLICATION NO.

EP 21 15 4941

This annex lists the patent family members relating to the patent documents cited in the above-mentioned European search report.
The members are as contained in the European Patent Office EDP file on
The European Patent Office is in no way liable for these particulars which are merely given for the purpose of information.

29-06-2021

| Patent document cited in search report | Publication date | Patent family member(s) | Publication date |
|---|---|---|---|
| US 2020193382 A1 | 18-06-2020 | NONE | |
| CN 111198943 A | 26-05-2020 | NONE | |

EPO FORM P0459

For more details about this annex : see Official Journal of the European Patent Office, No. 12/82